# EUROPEAN PATENT APPLICATION

(11) **EP 2 301 368 A1**
(43) Date of publication of application: **30.03.2011**
(21) Application number: 09011467.9
(22) Date of filing: 08.09.2009
(51) Int. Cl.: A23L 3/34, A23K 1/18, A61K 31/19

(54) **Composition for prevention against spoilage by microorganisms and uses and products related thereto**

(71) Applicant: MARS, INCORPORATED, McLean Virginia 22101-3885 (US)
(72) Inventor: Schrader, Elke, 27283 Verden/Aller (DE); Finnegan, Susan, Wodonga, Victoria 3689 (AU); Redman, Andrew, Wodonga, Victoria 3689 (AU); Shastry, Arun, Franklin, TN 37064 (US); Talsania, Monica, Bistall, Batley, West Yorkshire, WF17 9LU (GB)
(74) Representative: Winkler, Andreas Fritz Ernst

(57) **Abstract**

The invention is related to a composition for prevention against spoilage by microorganisms, characterized by a content of at least one compound from group (a) and at least one compound from group (b): (a) organic acids selected from the group consisting of caprylic acid, cinnamic acid, butyric acid, lactic acid, tartaric acid and fumaric acid, and salts thereof; (b) plant or fruit extracts, the oily phases of plant or fruit extracts, and monosubstances derived from such extracts or oily phases thereof, as well as to uses and products related thereto.

## Description

The present invention relates to compositions for prevention against spoilage by microorganisms and uses and products related thereto.

Industrially processed food and feed products have to be protected from deterioation by growth of microorganisms, such as fungi and bacteria. Whereas wet products are usually going through a retort process wherein food or feed is cooked and placed in a can or container for further sterilization and cooking to kill the microorganisms and dry products are not specifically endangered by growth of microorganisms because of their low moisture contents and water activities, there is specifically a problem with intermediate moisture foods and feeds, such as intermediate moisture pet food products having a moisture content of from about 10 to 40 wt.-% and a water activity in the range of from 0.60 to 0.90, in particular from 0.65 to 0.85. At these moisture levels, spoilage of the products is mainly related to spoilage caused by moulds and yeasts, and these microorganisms tend to deteriorate the products in terms of organoleptic properties or, in some instances, produce toxins.

Therefore, specific antimycotic compositions are usually added to such products. The prior art mostly uses antimycotic compositions based on sorbic acid, in particular sorbate, or benzoic acid, in particular benzoate. However, other microbiocidals for improving the shelf life of such products are known from the prior art.

For example, EP 0 762 837 B1 describes a method for the improvement of keeping the quality and/or stabilization of microbially perishable products wherein the surfaces of the products and/or the environment are treated with a microbiocidal composition comprising benzyl alcohol and at least one microbiocidally active GRAS (generally recognized as safe) flavoring agent, wherein said GRAS flavoring agent is selected from specific alcohols, aldehyds, phenols, acetates, acids, alicine, terpenes, acetals, polyphenols and essential oils. These compositions, however, mandatorily require the presence of benzyl alcohol and are not used as additives to the products.

Mixtures of organic acids and diols for antimicrobial compositions are described in EP 0 785 714 B1.

WO2008/007245 A2 discloses a preservative system for pet food products based on at least one natural preservative, optionally further comprising a chelating agent, which might be one of some specific organic acids. The examples of WO2008/007245 show an effect of these natural preservative systems to result in the delay in the breakdown of fat from oxidation. No effect against growth of microorganisms is discussed or shown in this prior art document.

The objective of the present invention therefore is to provide for a composition for effective protection of food or feed products, in particular intermediate moisture pet food products, but not restricted thereto, from the growth of microorganisms, in particular moulds and yeasts, which are effective at specifically low concentration, and may additionally have a positive impact of palatability.

The objective is solved by a composition for prevention against spoilage by microorganisms by a content of at least one compound from group (a) and at least one compound from group (b):
(a) organic acids selected from the group consisting of caprylic acid, cinnamic acid, butyric acid, lactic acid, tartaric acid and fumaric acid, and salts thereof
(b) plant or fruit extracts, the oily phases of plant or fruit extracts, and more substances derived from such extracts or oily phases thereof.

In one embodiment the plant or fruit extract from group (b) is selected from the extract of cinnamon bark or cinnamon leaf, thyme extract, oregano extract, marjoram extract, lemon grass extract, cassia extract, geranium extract, grapefruit seed extract, cranberry extract and bilberry extract.

In a further embodiment the oily phase from group (b) is selected from the group consisting of cinnamon oil, lemon grass oil, thyme oil, lemon myrrth oil, oregano oil, teatree oil and clove oil.

Preferably, the monosubstance from group (b) is selected from the group consisting of cinnamon aldehyde, vanillin and functionally equivalent derivatives thereof.

In a preferred embodiment the organic acid from group (a) is caprylic acid, cinnamic acid or one or more salts thereof.

Furthermore, the component(s) from group (a) and the component(s) from group (b) may be present in the mass ratio of from 20:80 to 98:2, preferably from 40:60 to 80:20 .

The invention is also related to the use of a composition characterized by a content of at least one compound of group (a') and at least one compound of group (b), as defined in claim 1 to 4, or a content of at least two compounds from group (b), as defined in claim 1 to 4, wherein group (a') comprises straight, branched of cyclic, mono or polyvalent organic acids having 3 to 10 carbon atoms, optionally hydroxy or oxo substituted, for protection of food or feed products from growth of microorganisms.

The preferred use is for protection from growth of microorganisms of a pet food product, a human food product, a confectionary product or as part of a packaging for a food or feed product for such purpose.

Preferably, the organic acid from group (a') is selected from caprylic acid, cinnamic acid, levulinic acid, malic acid, butyric acid, lactic acid, tartaric acid, ascorbic acid, fumaric acid, citric acid and salts thereof.

Furthermore, the component(s) from group (a') and the component(s) from group (b) may be present in the mass ratio of from 20:80 to 98:2, preferably from 40:60 to 80:20 .

Moreover, the invention is related to a food or feed product with a content of from 0.01 % to 2.5% by dry weight of the food or feed product of a composition of the present invention.

Preferably, the food product is a pet food product, most preferably a pet food product having a moisture content of from 10 to 40 wt.-% and a water activity in the range from 0.60 to 0.90.

Most preferably, the pet food product has a water activity of from 0.65 to 0.85.

Although many uses of plant or fruit components or extracts in preparing human and pet foods are known for example for health benefits, flavor, taste, aroma, textual effects and color effects, the present invention is based on the surprising finding that there is an added benefit of some of those plant or fruit components or extracts, in particular when combined with one or more organic acids, to improve the shelf stability, in particular by preventing the growth of microorganisms, in particular moulds and yeasts, in food or feed products.

In the context of the present invention, "intermediate moisture pet food" is defined as a pet food product with a moisture content of from 10 to 40 wt.% and a water activity in the range of from 0.60 to 0.90.

It has now been surprisingly found that certain plant or fruit extracts and products or components derived therefrom have shown to provide in particular protective effects against moulds and yeasts in food or feed products, when added at levels up to about 2.5 wt.-%, in particular when combined with one or more organic acids. Specifically, those extracts, oils and components derived therefrom as specifically shown hereinabove have shown synergistic effects when two or more are used or when one or more thereof have been used with one or more of the organic acids mentioned hereinabove. Benefits of these synergistic effects include, but are not limited to:
(1) Usage of lower concentrations of the extract to prevent mould/yeast growth.
(2) Maximize the protection against a broader range of mould and yeast species.
(3) Positive impact on sensory perception of the owner through combination of extracts at significantly lower levels of each individual components then would otherwise be required.
(4) Minimize unpleasant order of flavors of the plant or fruit extracts by including them in significantly lower levels of each individual components then would otherwise be required.
(5) Usually no negative impact on palatability.
(6) Usually no negative impact on digestability.

The extract may be provided for in liquid, solid, resinous or partly volatile form. They may be fractionated, distilled, crystallized, separated or otherwise purified. The compositions may be applied in the recipe matrix and/or in a coating applied to the products. In order to facilitate appropriate distribution of the composition in the recipe matrix and/or in the coating, appropriate emulsifiers, such as e.g. lecithin, may be used. Also, the process of application of the composition into the recipe matrix and/or the coating might have an impact on availability for protection against spoilage.

As some of the components of group (b) may be sensitive towards oxidation, antioxidants, such as e.g. tocopherols, might be added in order to improve the stability of the antimycotic composition throughout the shelf life of the product.

It is also been noticed that the presence of a certain amount of sodium chloride (NaCl) in the composition and/or in the product can be beneficial for the overall antimycotic performance. A preferred range of sodium chloride in the finished product is between 1.0 and 2.0% by weight.

Inclusion of some of these extracts may also provide additional benefits in food or feed products besides the antimycotic effect. For example, the compositions may also provide anti-bacterial effects, bacteriostatic effects, mycostatic effects, pleasant aroma, flavor, color or texture or health benefits.

Although preferred, the present invention is not only related to the use of the antimycotic cocktail for intermediate moisture pet food products. Rather, it could also be used in refrigerated pet food systems, in human confectionary systems, in human foods, or as part of an antimycotic system in a packaging for a food or feed product.

The typical concentration of the composition in the ratio of the components thereof vary, depending on specific components chosen. Although someone skilled in the art could easily determine the respective amounts and ratios on the basis of those as, for example, described in the examples hereof, preferred ranges for the content in the finished product of specific components are given herein below:

| | |
|---|---|
| cinnamon oil | 0.05 - 0.5 wt.% |
| cinnamon aldehyde | 0.005 - 0.04 wt.% |
| grapefruit seed extract | 0.01 - 0.05 wt.% |
| vanillin | 0.01 - 0.1 wt.% |
| caprylic acid/sodium caprylate | 0.01 - 0.60 wt.% |
| cinnamic acid | 0.005 - 0.04 wt.% |
| malic acid | 0.1 - 1.0 wt.% |

In case that the antimycotic cocktail might have a negative impact on the palatability of the product, palatant/flavor ingredients or a masking system might be added, as known from the prior art.

### EXAMPLES

### Strain cocktail used for inoculation:

Zygosaccharomyces baillii
Saccharomyces cerevisiae
Zygosaccharomyces rouxii
Aspergillus niger
Penicillium aurantogriseum
Wallemia sebi
Eurotium repens
Eurotium herbariorum

### Method

Prior to the tests, the yeasts were grown in Malt Extract Broth (MEB, Oxoid, CM0057) at 25°C for 72 hours. The Aspergillus niger and Penicillium aurantogriseum were grown on pre-poured plates and agar slopes of Malt Extract Agar (MEA, Lab M, Lab 37) at 25°C for 1 week. The Eurotium repens was grown on pre-poured plates and agar slopes of Potato Dextrose Agar (PDA, Oxoid CM0139) at 25°C for 1 week. The Wallemia sebi and Eurotium herbariorum were grown on pre-poured plates and agar slopes of Wort Agar (WA, Oxoid, CM0247) at 25°C for 1 week.

On the day of the test, the moulds were harvested from the surface of the agar plates and slopes by adding sterile distilled water and scraping the surface growth into the water. The levels of yeasts and moulds in the diluents were determined microscopically using a haemocytometer.

The yeasts and moulds were diluted and mixed together as a cocktail to achieve a level of approximately 10⁷ colony forming units (cfu) per gram. Addition of 0.1 ml of the cocktail to the broths would achieve a final level of 10⁵ cfu/ml.

### Preparation of broths

The preparation of the individual broths was as follows:

### Broth at Aw 0.75

1 litre MEB was added to 1440 g glycerol. The pH was adjusted to 6.31 and the broths were dispensed into 10 ml amounts. Initial studies had shown that if the pH was adjusted to 6.0 prior to autoclaving, the resultant pH was 5.9. Therefore the broth was adjusted in order to achieve as close to the desired pH of 6.0 after autoclaving as possible.

Following autoclaving, the pH was measured at 6.18 and the Aw at 0.71. It was established that addition of 0.5 ml of sterile water would increase the Aw to 0.75. Therefore, 0.4 ml of sterile distilled water was added to the broths as they would be inoculated with 0.1 ml of inoculum, thus giving a total of 0.5 ml.

### Broth at Aw 0.85

1 litre MEB was added to 700 g glycerol. The pH was adjusted to 6.32 and the broths were dispensed into 10 ml amounts.

Following autoclaving, the pH was measured at 6.31 and the Aw at 0.82. It was established that addition of 0.3 ml of sterile water would increase the Aw to 0.85. Therefore, 0.2 ml of sterile distilled water was added to the broths as they would be inoculated with 0.1 ml of inoculum, thus giving a total of 0.3 ml.

The compositions of the antimycotic cocktails used to be added to the broths are indicated in Table 1.

Table 2 shows the growth results of the antimycotic cocktails in the broth model system wherein NG indicates no visible growth after 90 days at 25°C and NT has the meaning "not tested".

**Table 1 - Composition of antimycotic cocktails according to the invention**

| Antimycotic Cocktail | Example 1 | Example 2 | Example 3 | Example 4 | Example 5 | Example 6 | Example 7 |
|---|---|---|---|---|---|---|---|
| | relative conc in % | relative conc in % | relative conc in % | relative conc in % | relative conc in % | relative conc in % | relative conc in % |
| caprylic acid | 80 | 40 | 85.7 | | 7.3 | 2.8 | |
| malic acid | | | | | 90.9 | 94.4 | |
| cinnamon aldehyde | 20 | | 14.3 | 33.3 | 1.8 | 2.8 | 33.3 |
| grape fruit seed extract | | 60 | | | | | 66.7 |
| vanillin | | | | 66.7 | | | |

**Table 2 - Growth results**

| Cocktails | Time to observed growth | |
|---|---|---|
| | Aw 0.75 | Aw 0.85 |
| Example 1 | NG | NG |
| Example 2 | NG | NG |
| Example 3 | NG | NG |
| Example 4 | NG | NT |
| Example 5 | NG | NG |
| Example 6 | NG | NG |
| Example 7 | NG | NT |

The test results clearly show a high antimycotic effect of the respective compositions, both with a water activity of 0.75 and a water activity of 0.85.

Preliminary results on pet food products have been conducted. The total concentration of the various antimycotic cocktails applied to the pet food product can be seen from Table 3.

**Table 3 - Total concentration of antimycotic cocktails on pet food product**

| Cocktails | Total concentration of cocktail on product |
|---|---|
| Example 1 | 0.10 wt.% |
| Example 2 | 0.05 wt.% |
| Example 3 | 0.07 wt.% |
| Example 4 | 0.06 wt.% |
| Example 5 | 0.55 wt.% |
| Example 6 | 0.53 wt.% |
| Example 7 | 0.03 wt.% |

In stability tests and feeding tests it has been demonstrated that pet food products to which antimycotic cocktails according to the present invention have been applied show a superior shelf stability as well as a very good pet palatability without any negative impact on the digestibility.

The features disclosed in the foregoing description and in the claims may, both separately and in any combination thereof, be material for realizing the invention in diverse forms thereof.

## Claims

1. Composition for prevention against spoilage by microorganisms, **characterized by** a content of at least one compound from group (a) and at least one compound from group (b):
(a) organic acids selected from the group consisting of caprylic acid, cinnamic acid, butyric acid, lactic acid, tartaric acid and fumaric acid, and salts thereof
(b) plant or fruit extracts, the oily phases of plant or fruit extracts, and monosubstances derived from such extracts or oily phases thereof.

2. Composition according to claim 1, wherein the plant or fruit extract from group (b) is selected from the extract of cinnamon bark or cinnamon leaf, thyme extract, oregano extract, marjoram extract, lemon grass extract, cassia extract, geranium extract, grapefruit seed extract, cranberry extract and bilberry extract.

3. Composition according to claim 1, wherein the oily phase from group (b) is selected from the group consisting of cinnamon oil, lemon grass oil, thyme oil, lemon myrrth oil, oregano oil, tea-tree oil and clove oil.

4. Composition according to claim 1, wherein the monosubstance from group (b) is selected from the group consisting of cinnamon aldehyde, vanillin and functionally equivalent derivatives thereof.

5. Composition according to any of the preceding claims, wherein the organic acid from group (a) is caprylic acid, cinnamic acid or one or more salts thereof.

6. Composition according to any of the preceding claims, wherein the component(s) from group (a) and the component(s) from group (b) are present in a mass ratio of from 20:80 to 98:2, preferably from 40:60 to 80:20.

7. Use of a composition **characterized by** a content of at least one compound of group (a') and at least one compound of group (b), as defined in claims 1 to 4, or a content of at least two compounds from group (b), as defined in claims 1 to 4, wherein group (a') comprises straight, branched or cyclic, mono- or polyvalent organic acids having 3 to 10 carbon atoms, optionally hydroxy or oxo substituted, for protection of food or feed products from growth of microorganisms.

8. Use according to claim 7 for protection from growth of microorganisms of a pet food product, a human food product, a confectionary product or as part of a packaging for a food or feed product for such purpose.

9. Use according to claim 7 or 8, wherein the organic acid from group (a') is selected from caprylic acid, cinnamic acid, levulinic acid, malic acid, butyric acid, lactic acid, tartaric acid, ascorbic acid, fumaric acid citric acid, and salts thereof.

10. Use according to any of claims 7 to 9, wherein the component(s) from group (a') and the component(s) from group (b) are present in a mass ratio of from 20:80 to 98:2, preferably from 40:60 to 80:20.

11. Food or feed product with a content of from 0.01 % to 2.5% by dry weight of the food or feed product of a composition according to any of claims 1 to 6 or as defined in claims 7 to 10.

12. Food product according to claim 11, wherein the food product is a pet food product.

13. Pet food product according to claim 12, having a moisture content of from 10 to 40 wt.-% and a water activity in the range from 0.60 to 0.90.

14. Pet food product according to claim 13, having a water activity of from 0.65 to 0.85.
